# EUROPÄISCHE PATENTSCHRIFT

(11) **EP 0 344 532 B1**
(45) Veröffentlichungstag und Bekanntmachung des Hinweises auf die Patenterteilung: **13.07.1994**
(21) Anmeldenummer: 89108965.8
(22) Anmeldetag: 18.05.1989
(51) Int. Cl.: F16J 15/32, F16J 15/50, F04D 29/10, H02K 49/00

(54) **Anordnung zur sicheren Abdichtung der Lagerung einer rotierenden Welle mit zugehörigem Antriebselement**
Sealing device of the bearing of a rotating shaft with its drive unit
Dispositif d'étanchéification du palier d'un axe tournant avec son équipement moteur

(30) Priorität: 03.06.1988 DE 3818890
(43) Veröffentlichungstag der Anmeldung: 06.12.1989
(73) Patentinhaber: Ekato Industrieanlagen Verwaltungsgesellschaft mbH & Co., D-79650 Schopfheim (DE)
(72) Erfinder: Jekat, Herbert, Dipl.-Ing. Dr., D-7860 Schopfheim-Langenau (DE); Klatt, Detlef, D-7860 Schopfheim (DE); Todtenhaupt, Erich, Dipl.-Ing. Dr., D-7860 Schopfheim (DE)
(74) Vertreter: Leyh, Hans, Dr.-Ing.

(56) Entgegenhaltungen:
- WO-A-88/09874
- GB-A- 922 319
- US-A- 4 135 253
- WORLD PUMPS, Nr. 4, April 1982, Seiten 175-178, Surrey, GB; M. KNORR et al.: "Permanent magnet drives for pumps and agitators"

## Beschreibung

Die Erfindung bezieht sich auf eine Anordnung zur Abdichtung der Lagerung und des Antriebselementes einer rotierenden Welle, insbesondere für Rührwerke und/oder Pumpenlaufräder.

Aus der Zeitschrift "World Pumps", April 1982, Seiten 175 bis 178, sind permanentmagnetische Antriebe für Pumpen und Rührwerke bekannt. Hierbei wird u.a. eine dichtungslose Pumpe beschrieben, welche eine Kombination aus einer Zentrifugalpumpe und einer magnetischen Kupplung darstellt. Hierbei handelt es sich um eine Pumpe mit keiner Verbindung an der Welle zwischen dem das Medium enthaltenden Raum und der Atmosphäre, d.h., der das Medium enthaltende Raum ist vollständig gekapselt. Üblicherweise werden derartige dichtungslose Pumpen zum Pumpen von reinen Flüssigkeiten eingesetzt, da das Medium die Schmiermittelquelle für das Gleitlager des inneren Rotors bildet. Verunreinigungen können hierbei vor dem Eintritt in das Lager und den Magnetbereich ausgefiltert werden. Wenn die Verunreinigungen klebrig sind und nicht ausgefiltert werden können, dann kann unabhängig ein Strom eines reinen Fluids, welches mit dem Medium kompatibel ist, an einer Stelle eingespritzt werden, welches dann zum Pumpenraum gelangt. Wenn dies nicht möglich ist, so bleibt noch als Lösung übrig, den Pumpenkreislauf vollständig von einem unabhängigen Schmiermittel/Kühlmittel-Kreislauf zu trennen, welcher seinen eigenen Vorratsbehälter, seine eigene Dosierpumpe und einen Wärmeübertrager hat. Hierbei ist eine statische, topfförmige Dichtung vorgesehen, welche von dem Spalttopf der Magnetkupplung gebildet wird. Da die Pumpe dichtungslos arbeiten soll, müssen die Lager für die Welle in unmittelbarer Nähe der Antriebsseite und der dort vorgesehenen statischen Dichtung angeordnet werden. Bei langen Wellen führt dies zu Lagerproblemen, und wenn die Lager weiter zur Mediumseite hin angeordnet werden, so ergeben sich Korrosionsprobleme, wenn beispielsweise Dampf aus dem das Medium enthaltenden Raum in die Lagerbereiche eindringt. Wenn hierbei ein unabhängiger Schmiermittel/Kühlmittelkreislauf vorhanden ist, so ist dieser als ein in sich geschlossenes System ohne Schnittstelle zur Welle und zum Pumpenraum anzusehen.

Aus dem Dokument WO 88/09874 ist im Sinne von Art. 54(3) EPÜ eine Rotationspumpe mit einem Kupplungsteil zu entnehmen. Diese Rotationspumpe soll derart ausgelegt werden, daß sich schnell verschleißende Teile einfach auswechseln lassen, ohne daß man teure und nicht so sehr verschleißanfällige Teile, insbesondere des Antriebs wegwerfen muß. Ferner soll bei der Auslegung auch der Umstand berücksichtigt werden, daß die mit dem Medium in Berührung kommenden Pumpenteile zur Vermeidung von Kontaminierungen schnell und einfach für sich ausgewechselt und beseitigt werden können, und der Antriebsteil wiederverwendet werden kann. Diese Pumpe umfaßt ein Kupplungsteil und ein Antriebsteil. Das Kupplungsteil kann Dichtungen enthalten, welche verhindern, daß Fluid in Teile des Kupplungsteils eindringt, oder die verhindern, daß Schmiermittel oder Kühlmittel in den Pumpenradteil eindringt. Der Antriebsteil kann ebenfalls Dichtungen enthalten, welche das Schmiermittel und das Kühlmittel an der vorbestimmten Stelle halten. Ferner können entweder eine Einweg-Dichtung oder undurchlässige Dichtungen vorgesehen sein, welche eine Wegbewegung des Kühlmittels/Schmiermittels entweder in eine oder beide Richtungen im Kupplungsteil verhindern. Ferner können das Kupplungsgehäuse und das Antriebsgehäuse vollständig getrennt voneinander vorgesehen sein, um die Beaufschlagung der Antriebseinrichtung durch Fluid unmöglich zu machen, was beispielsweise auftreten könnte, wenn die Dichtungen im Pumpenradgehäuse und im Kupplungsgehäuse versagen.

Für Prozesse auf dem Gebiet der Kerntechnik und der chemischen Industrie werden Wellenabdichtungen gefordert, die zur Atmosphäre leckagefrei sein müssen.

Der Erfindung liegt daher die Aufgabe zugrunde, eine Anordnung der gattungsgemäßen Art bereitzustellen, welche eine im wesentlichen leckagefreie Abdichtung des Rührwerks und/oder des Pumpenlaufrads auf konstruktiv einfache und betriebszuverlässige Weise ermöglicht.

Nach der Erfindung wird hierzu eine Anordnung zur Abdichtung der Lagerung und des Antriebselements einer rotierenden Welle, insbesondere für Rührwerke und/oder Pumpenlaufräder angegeben, welche im Patentanspruch 1 wiedergegeben ist.

Bei der erfindungsgemäßen Anordnung dichtet die Gleitringdichtung den Produktraum gegenüber den Lagern und dem Antriebselement ab, während das hermetisch abdichtende statische Dichtelement das Antriebsende der Rührwelle und das auf ihr sitzende Antriebselement hermetisch nach außen abdichtet. Die dynamische Gleitringdichtung bewirkt eine Dichtung an einer Stelle mit einer relativ kleinen Druckdifferenz, so daß die Gleitringdichtung dauerhaft und wiederstandsfähig ist. Die Abdichtung auf der Seite mit der größeren Druckdifferenz gegenüber der Atmosphäre erfolgt hingegen durch das statische Dichtelement. Bei der erfindungsgemäßen Anordnung erhält man zwischen dem statischen Dichtelement und der dynamischen Gleitringdichtung einen Sperraum, welcher von dem Gehäuseinnenraum gebildet wird, und in welchem die empfindlichen Teile, wie Lager, Kupplungsinnenteil und dergleichen in geschützter Weise untergebracht werden können. Dieser Gehäuseinnenraum steht unter einem geeigneten Fluiddruck, der wenigstens etwa gleich, vorzugsweise aber über dem Druck im Produktbehälter liegt.

Zweckmäßigerweise ist das Antriebselement hierbei das Innenteil einer Magnetkupplung, deren Außenteil über eine Antriebswelle von einem geeigneten Antriebsmotor, wie einem Elektromotor oder einem Hydraulikmotor, angetrieben wird. Zwischen dem Innenkupplungsteil und dem Außenkupplungsteil der Magnetkupplung ist das beispielsweise topfförmig ausgebildete statische Dichtelement eingebaut.

Die Drehmomentübertragung erfolgt durch Permanentmagnete an den beiden Kupplungsteilen.

Zweckmäßigerweise wird bei der Gleitringdichtung der Produktraum durch einen Spalt zweier sehr glatter Flächen abgedichtet, die schnell aufeinander gleiten und von einem Differenzdruck beaufschlagt werden.

Die Gleitringdichtung und das statische Dichtelement bieten eine hohe Sicherheit gegen Leckage.

Vorzugsweise ist das Gehäuse mit den Lagern für die rotierende Welle zwischen der Gleitringdichtung und dem statischen Dichtelement mit einer Schmierflüssigkeit gefüllt.

Das Gehäuse kann hierbei vollständig oder nur teilweise, z. B. etwa bis zum oberen Lager, mit der Schmierflüssigkeit gefüllt sein, wobei im letzteren Fall oberhalb des Spiegels der Schmierflüssigkeit ein Gaspolster, insbesondere aus Stickstoff vorhanden ist, welches die Schmierflüssigkeit mit Druck beaufschlagt.

Es kann aber auch vorgesehen sein, das Gehäuse mit den Lagern für die rotierende Welle zwischen der Gleitringdichtung und dem statischen Dichtelement nur mit Gas, insbesondere Stickstoff, zu füllen, wobei in diesem Fall die Lager trocken laufen.

Der Druck des Gases bzw. der Schmierflüssigkeit liegt vorzugsweise etwa 0 bis etwa 3 bar über dem Druck im Produktbehälter.

Vorteilhafterweise sind auf der Welle Pumpen zur Umwälzung der Schmierflüssigkeit und zur Abfuhr der an der Gleitringdichtung und am Antriebselement stehenden Wärme an eine Gehäusekühlung angeordnet.

Das Außenteil der Magnetkupplung ist zweckmäßigerweise von einer Haube dicht umschlossen, die mit einem Abblasrohr versehen ist. Falls das topfförmige Dichtelement beschädigt werden sollte, kann der Inhalt zu einer Verbrennungsanlage oder einem Tank abgeleitet werden.

Das statische Dichtelement kann das Gehäuse für einen Antriebsmotor bilden, der ggf. über ein Getriebe mit dem einen Wellenende verbunden ist. Bei einer solchen Ausführungsform sind dann der Antriebsmotor und das Getriebe innerhalb des statischen Dichtelementes eingebaut.

Nach einer weiteren Ausführungsform kann das untere Lager im Produktbehälter liegen, während das obere Lager im Bereich des Antriebselementes angeordnet ist.

Die Gleitringdichtung kann ggf. auch unter dem Niveau des zu behandelnden Produktes angeordnet sein.

Auch ist es möglich, die Welle mit ihren Lagern, die durch die Gleitringdichtung und das statische Dichtelement abgedichtet sind, so einzubauen, daß sie vollständig von dem Produkt umschlossen sind.

Nach einer bevorzugten Ausgestaltung der Erfindung beträgt der Differenzdruck an der Gleitringdichtung etwa 0 bis 15 % des Druckes im Produktbehälter.

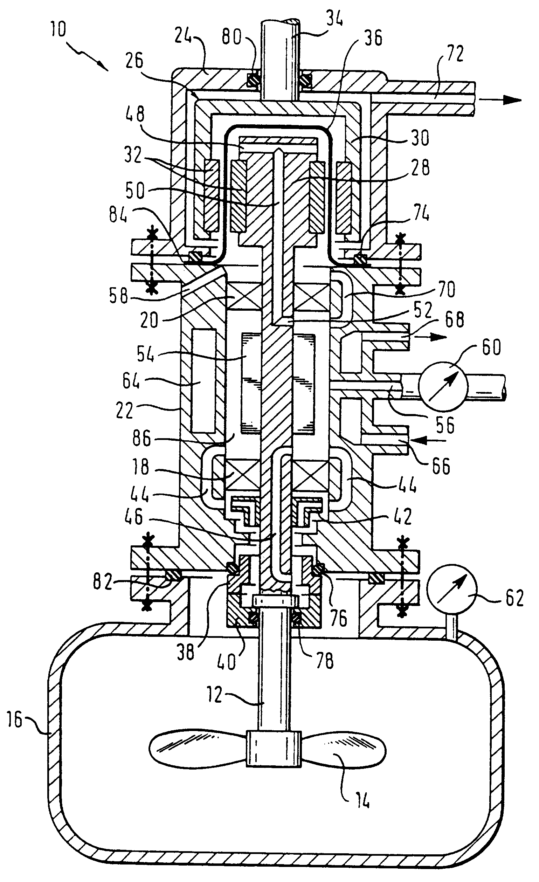

Eine beispielsweise Ausführungsform der Erfindung wird nachfolgend anhand der einzigen Figur der Zeichnung erläutert, die im Schnitt ein Rührwerk mit einer Rührwelle und einem Rührorgan zeigt, welches die erfindungsgemäße Anordnung aufweist.

Die Figur zeigt schematisch ein Rührwerk 10 mit einer zum Beispiel lotrechten Welle 12, an deren unterem Ende ein Rührorgan 14, z.B. ein Rührpropeller mit mehreren Rührarmen, angebracht ist.

Das untere Ende der Welle 12 mit dem Rührorgan 14 ragt in einen Produktbehälter 16 hinein, in welchem sich das zu behandelnde Produkt befindet. Dieses Produkt kann, wie bereits ausgeführt, ein toxisches, ein radioaktives, ein aggressives oder ein explosives Medium sein oder auch eine Feststoffsuspension, wobei in diesem Fall eine praktisch leckagefreie Abdichtung nach außen verlangt wird.

Die Welle 12 ist radial und axial in Lagern 18, 20, insbesondere Wälzlagern, drehbar gelagert, wobei die Lager 18, 20 ihrerseits in einem Gehäuseteil 22, der sogenannten Lagerlaterne, eingebaut und abgestützt sind.

Die Lagerlaterne 22 ist mit dem Produktbehälter 16 fest, z.B. durch nicht näher dargestellte Schrauben, verbunden, wobei zwischen diesen beiden Teilen eine ringförmige Dichtung 82 angeordnet ist.

Auf das obere Ende der Lagerlaterne 22 ist eine Haube 24 aufgesetzt, die mit der ersteren ebenfalls durch Schrauben fest verbunden ist, wobei zwischen der Haube 24 und der Lagerlaterne 22 ebenfalls eine Dichtung, z.B. ein Dichtring 74, eingesetzt ist, wie im einzelnen noch erläutert wird.

Die Drehmomentübertragung auf die Welle 12 erfolgt über eine Magnetkupplung 26, die aus einem Außenkupplungsteil 30 und einem Innenkupplungsteil 28 besteht, wobei das Außenkupplungsteil 30 an seiner Innenwand und das Innenkupplungsteil 28 an seinem Außenumfang mit Permanentmagneten 32 besetzt ist.

Das Außenkupplungsteil 30 ist innerhalb der Haube 24 drehbar eingebaut und mit einer Antriebswelle 34 gekoppelt, welche sich durch die Haube 24 nach außen erstreckt und die ihrerseits mit einem nicht dargestellten Antriebsmotor gekoppelt ist für den Antrieb des Außenkupplungsteiles 30. Zwischen der Antriebswelle 34 und der Haube 24 ist ein Dichtring 80 angeordnet.

Das Innenkupplungsteil 28 ist mit der Rührerwelle 12 fest verbunden oder es ist, wie im dargestellten Beispiel, einteilig mit dieser ausgeführt.

Zwischen dem Innenkupplungsteil 28 und dem Außenkupplungsteil 30 ist ein statisches Dichtelement 36 eingebaut, das etwa topfförmige Gestalt hat und das an seinem, in der Figur unteren offenen Ende mit einem radial auswärts gerichteten Bund 84 versehen ist, der zwischen der Lagerlaterne 22 und der Haube 24 zusammen mit der Dichtung 74 angeordnet und durch die beiden Teile 22, 24 zusammengespannt ist, womit das Dichtelement 36 eine statische hermetische Abdichtung des Innenraumes des Rührwerkes nach außen zur Atmosphäre bewirkt.

Das Dichtelement 36, das in der dargestellten Ausführungsform den sogenannten Spalttopf der Magnetkupplung 26 bildet, besteht z.B. aus einem metallfreien Faserverbundwerkstoff und es trennt den Druckbereich des Rührwerkes von der Atmosphäre. Bei Verwendung eines solchen Materials werden unerwünschte Wirbelströme bei der berührungslosen Übertragung des Drehmomentes vom Außenkupplungsteil 30 auf das Innenkupplungsteil 28 vermieden. Das Dichtelement 36 kann aber auch aus einem elektrisch leitenden Werkstoff bestehen, wobei dann zweckmäßigerweise eine Kühlung verwendet wird, wie sie bei der dargestellten und beschriebenen Ausführungsform vorgesehen ist.

Auf der Seite des Produktbehälters 16 ist zwischen der Rührerwelle 12 und dem Gehäuseteil 22 eine Gleitringdichtung eingebaut, die aus einem stationären Ring 38 und einem mit der Welle 12 umlaufenden Ring 40 gebildet ist.

Zwischen dem stationären Ring 38 und dem Gehäuse 22 sitzt eine ringförmige Dichtung 76, ebenso ist zwischen dem mit der Welle 12 umlaufenden Ring 40 und der Welle ein Dichtring 78 angeordnet.

Die einander zugewandten Stirnflächen der beiden Ringe 38 und 40 gleiten im Betrieb aufeinander unter Bildung eines sehr engen Spaltes und die beiden Ringe der Gleitringdichtung werden durch den Differenzdruck zwischen dem Druck im Produktbehälter 16 und dem Druck im Innenraum 86 des Gehäuses gegeneinandergedrückt.

Der Druck im Innenraum des Produktbehälters 16 wird z.B. durch ein Manometer 62 und der Druck im Innenraum 86 des Gehäuses wird z.B. durch ein Manometer 60 gemessen.

Die Gleitringe können aus SiC, Si/SiC oder aus Kohle bestehen, die je nach Anwendung miteinander kombiniert werden können. Sie können unter anderem auch bei Feststoffsuspensionen und auch bei Behandlung von klebenden und krustenden Produkten eingesetzt werden.

Die Gleitringdichtung kann ferner auch unterhalb des Niveaus des zu behandelnden Produktes, d.h. eingetaucht in dieses, angeordnet sein.

Der Innenraum 86 des Rührwerkgehäuses zwischen der Gleitringdichtung und dem statischen Dichtelement kann vollständig mit einem Gas, z.B. Stickstoff, gefüllt sein, der über eine Leitung 58 eingefüllt und nachgefüllt werden kann. In diesem Fall sind die Lager 18 und 20 trockenlaufende Lager, z.B. aus keramischen Werkstoffen oder aus Kunststoffen.

In der dargestellten Ausführungsform ist der Innenraum 86 mit einer Schmierflüssigkeit gefüllt, entweder vollständig oder so weit, daß das obere Lager 20 gerade in das Schmiermittel eintaucht. In diesem Fall wird über dem Füllstand der produktneutralen Schmierflüssigkeit ein neutrales Gas, insbesondere Stickstoff, eingefüllt und zwischen dem Schmierflüssigkeitsspiegel und dem topfförmigen Dichtelement 36 ein Gaspolster unter Druck aufrechterhalten, durch welches die Schmierflüssigkeit druckbeaufschlagt wird.

Der Druck im Gaspolster und damit in der Schmierflüssigkeit wird über die Leitung 58 von einer äußeren Gasversorgung auf etwa 0 bis etwa 3 bar über dem Druck im Produktbehälter 16 gehalten. Dies ist auch dann der Fall, wenn der Innenraum 86 des Gehäuses vollständig mit Gas oder vollständig mit Schmierflüssigkeit gefüllt ist.

Da der Druck im Innenraum 86 somit mindestens gleich dem Druck im Produktbehälter 16, vorzugsweise aber etwas höher ist, kann aus dem Produktbehälter 16 kein Produkt in den Innenraum 86 eindringen.

Die Leckage an Schmierflüssigkeit ist bei einer Druckdifferenz bis zu 3 bar an der Gleitringdichtung sehr gering. Im Bedarfsfalle kann dann Schmierflüssigkeit über eine Leitung 56 nachgefüllt werden.

Die Schmierflüssigkeit dient nicht nur zur Schmierung der Gleitringdichtung, sondern auch zur Kühlung und Abfuhr der an der Gleitringdichtung und gegebenenfalls an der Magnetkupplung entstehenden Wärme.

Zu diesem Zweck sind auf der Welle Pumpen 42, 48 und 54 angeordnet.

Die Pumpe 42 sitzt zwischen der Gleitringdichtung und dem unteren Lager 18, sie läuft mit der Welle 12 um und saugt über axiale Kanäle die Schmierflüssigkeit an und schleudert die letztere infolge der Fliehkraft radikal nach außen. Im Gehäuse 22 sind zwei Überströmkanäle 44 ausgebildet, die den Bereich des Innenraumes 86 unter dem Lager 18 mit dem Bereich oberhalb des Lagers 18 verbinden. (Selbstverständlich kann auch nur ein solcher Überströmkanal 44 oder mehr als zwei Kanäle vorgesehen sein).

In der Welle 12 ist ebenfalls ein Überströmkanal 46 ausgebildet, der den Bereich des Innenraumes 86 oberhalb des Lagers 18 mit dem Bereich unmittelbar bei der Gleitringdichtung verbindet, wodurch eine Umwälzung der Schmierflüssigkeit von der Gleitringdichtung 38, 40 über die Pumpe 42 und die Überströmkanäle 44 zu dem Bereich des Innenraumes 86 oberhalb des Lagers 18 erfolgt und von dort zurück durch den Überströmkanal 46 zur Gleitringdichtung.

Das in der Figur obere Ende der Welle bzw. der Innenkupplungsteil 28 ist ebenfalls mit einer Pumpe 48 versehen in Form einer Querbohrung im Innenkupplungsteil 28 oberhalb der Permanentmagnete 32, von welcher Querbohrung eine axiale Bohrung 50 in der Welle 12 abzweigt und nach unten verläuft, bis unterhalb des oberen Lagers 20, wo die axiale Bohrung 50 über eine kurze Querbohrung 52 in den Innenraum 86 des Gehäuses mündet. Ferner ist im Gehäuse, d.h. in der Lagerlaterne 22, ein weiterer überströmkanal 70 ausgebildet, der oberhalb und unterhalb des oberen Lagers 20 in den Innenraum 86 mündet. (Es ist nur ein solcher Überströmkanal 70 dargestellt, es können aber auch mehrere vorgesehen sein).

Wenn sich die Welle 12 dreht, wird Schmierflüssigkeit unterhalb des Lagers 20 über die Querbohrung 52 und die Längsbohrung 50 angesaugt, dann durch die die Pumpe bildende Querbohrung 48 infolge der Fliehkraft radial nach außen gefördert, worauf die Schmierflüssigkeit zwischen dem topfförmigen Dichtelement 36 und dem Innenkupplungsteil 28 nach unten fließen und über den Oberströmkanal 70 wieder in den Bereich unterhalb des Lagers 20 gelangen kann, wo sie wieder in die Querbohrung 52 eintreten kann, womit der Kreislauf geschlossen ist.

Durch die Pumpe 42 kann somit die Wärme von der Gleitringdichtung 38, 40 und durch die Pumpe 48 kann die Wärme von der Magnetkupplung 26 abgeführt werden.

Auf der Welle sitzt ferner drehfest mit ihr verbunden im Bereich zwischen den beiden Lagern 18 und 20 ein Pumpenrad 54, durch das die Schmierflüssigkeit im Innenraum 86 umgewälzt wird, um die Wärme, die sie enthält, an eine Gehäusekühlung 64 abzugeben.

Das Gehäuse, insbesondere die Lagerlaterne 22, ist mit Kühlkanälen, wie z.B. 64, versehen, denen über eine Zulaufleitung 66 ein Kühlmittel, z.B. Kühlwasser, zugeführt und über eine Ablaufleitung 68 wieder abgeführt wird.

Die Schmierflüssigkeit wird, wie bereits ausgeführt, über die Leitung 56 zugeführt bzw. nachgefüllt und ihr Druck und damit der Druck im Innenraum 86 wird durch das Manometer 60 gemessen.

Im Stillstand des Rührwerkes dichtet die Gleitringdichtung 38, 40 gegen den vollen Druck im Produktbehälter 16 ab.

Im Betrieb wird eine Leckage vermieden, da der Druck im Innenraum 86 des Rührwerkes höher ist als im Produktbehälter 16, wobei der Differenzdruck an der Gleitringdichtung zweckmäßigerweise bei etwa 0 bis 15 % des Druckes im Produktbehälter 16 liegt.

Sollte die Gleitringdichtung undicht werden, so wird eine nicht gezeigte Nachfüllpumpe für die Schmierflüssigkeit eingeschaltet und/oder gegebenenfalls der Druck des Gaspolsters erhöht und ein Alarm ausgelöst. Erhöht sich die Leckage, so schaltet das Rührwerk automatisch ab.

Sollte das statische, hermetisch abdichtende Dichtelement 36 undicht werden, so daß der Druck im Innenraum 86 des Gehäuses abfällt, so wird das Rührwerk ebenfalls abgeschaltet. Für den Fall, daß dann noch die Gleitringdichtung undicht werden sollte, kann die Leckage über eine Leitung 72 zur Verbrennung, zur Abgaswäsche oder in einen Sicherheitstank abgeleitet werden.

Nach einer anderen, nicht dargestellten Ausführungsform kann das statische Dichtelement 36 das Gehäuse für einen Antriebsmotor bilden, der gegebenenfalls über ein Getriebe mit dem oberen Ende der Rührerwelle 12 gekoppelt ist. In diesem Fall ist dann der gesamte Antrieb einschließlich des etwa erforderlichen Getriebes innerhalb des statischen, hermetisch abdichtenden Elementes 36 eingebaut.

Auch kann das untere Lager im Produktbehälter 16 und das obere Lager im Bereich des Antriebselementes angeordnet sein, wobei dann die Gleitringdichtung zwischen den beiden Lagern liegt. Schließlich kann gemäß einer weiteren, nicht dargestellten Ausführungsform die Welle mit ihren Lagern 18, 20, die durch die Gleitringdichtung 38, 40 und das statische Dichtelement 36 abgedichtet sind, vollständig von dem zu behandelnden Produkt umgeben sein.

## Patentansprüche

1. Anordnung zur Abdichtung der Lagerung und des Antriebselementes (28) einer rotierenden Welle (12), insbesondere von Rührwerken und/oder Pumpenlaufrädern, in geschlossenen Behältern (16), in welchen aggressive, explosive, radioaktive oder toxische Medien oder Feststoffsuspensionen behandelt werden, wobei die Welle (12) unter Durchführung in einem Gehäuse (22, 24) derart gelagert ist, daß ihr eines Ende in das zu behandelnde Produkt hineinragt, während auf ihrem anderen Ende das Antriebselement (28) angeordnet ist, und wobei antriebsseitig zwischen der Welle (12) und dem Antriebselement (28) einerseits und dem Gehäuse (22, 24) andererseits ein statisches, hermetisch abdichtendes Dichtelement (36) angeordnet ist, wobei produktseitig zwischen der Welle (12) und dem Gehäuse (22) eine Gleitringdichtung (38, 40) zur Abdichtung des Produktraumes gegenüber einem Gehäuseinnenraum (86) angeordnet ist, in welchem Lager (18, 20) für die Welle (12) und das fest mit der Welle (12) verbundene Antriebselement (Kupplungsinnenteil) (28) angeordnet sind, das statische Dichtelement (36) den Gehäuseinnenraum (86) nach außen zur Atmosphäre hermetisch abdichtet und der Gehäuseinnenraum (86) mit den Lagern (18, 20) zwischen der Gleitringdichtung (38, 40) und dem statischen Dichtelement (36) mit einem Fluiddruck beaufschlagt ist, der wenigstens etwa gleich, vorzugsweise aber über dem Druck im Produktbehälter (16) liegt.

2. Anordnung nach Anspruch 1, **dadurch gekennzeichnet**, daß das Antriebselement das Innenteil einer aus Innenkupplungsteil (28) und Außenkupplungsteil (30) bestehenden Magnetkupplung (26) ist, und daß das statische Dichtelement (36) der Spalttopf der Magnetkupplung (26) ist.

3. Anordnung nach Anspruch 1, **dadurch gekennzeichnet**, daß der Innenraum (86) des Gehäuses zwischen der Gleitringdichtung (38, 40) und dem statischen Dichtelement (36) mit einer Schmierflüssigkeit gefüllt ist.

4. Anordnung nach Anspruch 3, **dadurch gekennzeichnet**, daß der Innenraum (86) des Gehäuses nur teilweise, insbesondere bis zum oberen Lager (20), mit Schmierflüssigkeit gefüllt ist und oberhalb des Spiegels der Schmierflüssigkeit ein Gaspolster, insbesondere aus Stickstoff, vorgesehen ist, durch welches die Schmierflüssigkeit druckbeaufschlagt ist.

5. Anordnung nach Anspruch 1, **dadurch gekennzeichnet**, daß der Innenraum (86) des Gehäuses zwischen der Gleitringdichtung (38, 40) und dem statischen Dichtelement (36) mit einem Gas, insbesondere Stickstoff, gefüllt ist.

6. Anordnung nach Anspruch 3 oder 5, **dadurch gekennzeichnet**, daß der Druck in der Schmierflüssigkeit bzw. im Gas etwa 0 bis 3 bar über dem Druck im Produktbehälter (16) liegt.

7. Anordnung nach einem der vorhergehenden Ansprüche**, dadurch gekennzeichnet**, daß auf der Welle (12) zwischen dem unteren Lager (18) und der Gleitringdichtung (38, 40) eine Pumpe (42) angeordnet ist zur Abfuhr der an der Gleitringdichtung entstehenden Wärme über die Schmierflüssigkeit an eine Gehäusekühlung (64).

8. Anordnung nach einem der vorhergehenden Ansprüche, **dadurch gekennzeichnet**, daß die Welle (12) an ihrem oberen Ende mit einer Pumpe (48) versehen ist zur Abfuhr von Wärme vom Antriebselement (28) über die Schmierflüssigkeit zu einer Gehäusekühlung (64).

9. Anordnung nach einem der Ansprüche 3 bis 8, **dadurch gekennzeichnet**, daß auf der Welle (12), insbesondere zwischen den Lagern (18, 20), ein Pumpenrad (54) angeordnet ist zur Umwälzung des Schmiermittels und zur Abführung der Wärme an eine Gehäusekühlung (64).

10. Anordnung nach Anspruch 2, **dadurch gekennzeichnet**, daß das Außenkupplungsteil (30) der Magnetkupplung (26) von einer mit einer Abblasleitung (72) versehenen Haube (24) dicht umschlossen ist.

11. Anordnung nach Anspruch 1, **dadurch gekennzeichnet**, daß das statische Dichtelement (36) das Gehäuse für einen Antriebsmotor ist, der gegebenenfalls über ein Getriebe mit der Welle (12) gekoppelt ist.

12. Anordnung nach Anspruch 1, **dadurch gekennzeichnet**, daß die Gleitringdichtung in das Produkt eingetaucht angeordnet ist.

13. Anordnung nach Anspruch 1, **dadurch gekennzeichnet**, daß die Welle mit ihren Lagern und dem Antriebselement, die durch die Gleitringdichtung und das statische Dichtelement abgedichtet sind, vollständig von dem Produkt umgeben ist.

14. Anordnung nach einem der vorhergehenden Ansprüche, **dadurch gekennzeichnet**, daß der Differenzdruck an der Gleitringdichtung (38, 40) etwa 0 bis 15 % des Druckes im Produktbehälter (16) beträgt.

## Claims

1. Arrangement for sealing the mounting and the drive element (28) of a rotating shaft (12), in particular of stirring mechanisms and/or pump impellers, in closed containers (16), in which corrosive, explosive, radioactive or toxic media or solid suspensions are treated, the shaft (12) being mounted when working in a housing (22, 24), such that its one end projects into the product to be treated, whereas the drive element (28) is arranged on its other end, and a static, hermetically sealing sealing element (36) being arranged on the drive side between the shaft (12) and the drive element (28) on the one hand and the housing (22, 24) on the other hand, a floating ring seal (38, 40) being arranged on the product side between the shaft (12) and the housing (22) to seal the product chamber with respect to a housing inner chamber (86), in which bearings (18, 20) are arranged for the shaft (12) and the drive element (coupling inner part) (28) connected firmly to the shaft (12), the static sealing element (36) hermetically seals the housing inner chamber (86) externally from the atmosphere and the housing inner chamber (86) with the bearings (18, 20) between the floating ring seal (38, 40) and the static sealing element (36) is exposed to a fluid pressure which is at least approximately the same, but preferably above the pressure in the product container (16).

2. Arrangement according to claim 1, characterised in that the drive element is the inner part of a magnetic coupling (26) comprising inner coupling Part (28) and outer coupling part (30), and in that the static sealing element (36) is the slot cap of the magnetic coupling (26).

3. Arrangement according to claim 1, characterised in that the inner chamber (86) of the housing is filled with a lubricating fluid between the floating ring seal (38, 40) and the static sealing element (36).

4. Arrangement according to claim 3, characterised in that the inner chamber (86) of the housing is only partly, in particular to the upper bearing (20), filled with lubricating fluid, and a gas cushion, in particular of nitrogen, is provided above the level of the lubricating fluid, by means of which gas cushion the lubricating fluid is exposed to pressure.

5. Arrangement according to claim 1, characterised in that the inner chamber (86) of the housing is filled with a gas, in particular nitrogen, between the floating ring seal (38, 40) and the static sealing element (36).

6. Arrangement according to claim 3 or 5, characterised in that the pressure in the lubricating fluid or in the gas is approximately 0 to 3 bar above the pressure in the product container (16).

7. Arrangement according to one of the preceding claims, characterised in that a pump (42) is arranged on the shaft (12) between the lower bearing (18) and the floating ring seal (38, 40) to remove the heat being produced at the floating ring seal via the lubricating fluid at a housing cooling mechanism (64).

8. Arrangement according to one of the preceding claims, characterised in that the upper end of the shaft (12) is provided with a pump (48) to remove heat from the drive element (28) via the lubricating fluid to a housing cooling mechanism (64).

9. Arrangement according to one of claims 3 to 8, characterised in that a pump impeller (54) is arranged on the shaft (12), in particular between the bearings (18, 20) to circulate the lubricant and to remove the heat at a housing cooling mechanism (64).

10. Arrangement according to claim 2, characterised in that the outer coupling part (30) of the magnetic coupling (26) is sealingly enclosed by a cap (24) provided with a blow-off line (72).

11. Arrangement according to claim 1, characterised in that the static sealing element (36) is the housing for a drive motor which is optionally coupled to the shaft (12) via a set of gears.

12. Arrangement according to claim 1, characterised in that the floating ring seal is arranged to be immersed in the product.

13. Arrangement according to claim 1, characterised in that the shaft with its bearings and the drive element, which are sealed by the floating ring seal and the static sealing element, is completely surrounded by the product.

14. Arrangement according to one of the preceding claims, characterised in that the pressure differential at the floating ring seal (38, 40) is approximately 0 to 15 % of the pressure in the product container (16).

## Revendications

1. Dispositif destiné à rendre étanches le palier et l'équipement moteur (28) d'un axe rotatif (12), en particuler d'agitateurs et/ou de rotors de pompes, dans des enceintes fermées (16), dans lesquelles sont traités des milieux ou des suspensions de matières solides agressifs, explosifs, radioactifs ou toxiques, l'axe (12) étant logé pour la mise en oeuvre dans un carter (22, 24) de façon que sa première extrémité sorte vers le produit à traiter, alors que, sur son autre extrémité, est monté l'équipement moteur (28), du côté moteur, entre l'axe (12) et l'équipement moteur (28), d'une part, et le carter (22, 24), d'autre part, est placé un élément statique d'étanchéité (36) pour assurer hermétiquement l'étanchéité, du côté produit entre l'axe (12) et le carter (22), est placée une garniture étanche à anneau glissant (38, 40) pour rendre étanche la chambre du produit par rapport à une chambre interne (86) du carter, dans laquelle sont placés des paliers (18, 20) pour l'axe (12) et l'équipement moteur (partie interne du dispositif d'accouplement) (28) relié d'une manière fixe à l'axe (12), l'élément statique étanche (36) rend hermétiquement étanche vers l'extérieur la chambre interne (86) du carter à l'atmosphère, et la chambre interne (86) du carter avec les paliers (18, 20), entre la garniture étanche à anneau glissant (38, 40) et l'élément statique étanche (36) est alimentée par un fluide sous pression qui est au moins environ égale, pourtant de préférence supérieure, à la pression dans l'enceinte du produit (16).

2. Dispositif suivant la revendication 1, caractérisé en ce que l'équipement moteur est la partie interne d'un coupleur magnétique (26) fait d'une partie interne (28) et d'une partie externe (30), et en ce que l'élément statique étanche (36) est le pot de l'entrefer du coupleur magnétique (26).

3. Dispositif suivant la revendication 1, caractérisé en ce que l'espace interne (86) du carter entre la garniture étanche à anneau glissant (38, 40) et l'élément statique étanche (36) est rempli d'un fluide lubrifiant.

4. Dispositif suivant la revendication 3, caractérisé en ce que l'espace interne (86) du carter n'est rempli que partiellement, en particulier jusqu'au palier supérieur (20) de fluide lubrifiant et, au-dessus du niveau du fluide lubrifiant, est prévu un coussin de gaz, en particulier d'azote, par lequel le fluide lubrifiant est mis sous pression.

5. Dispositif suivant la revendication 1, caractérisé en ce que l'espace interne (86) du carter entre la garniture étanche à anneau glissant (38, 40) et l'élément étanche statique (36) est rempli de gaz, en particulier d'azote.

6. Dispositif suivant la revendication 3 ou 5, caractérisé en ce que la pression du fluide lubrifiant ou du gaz est supérieure d'environ 0 à 3 bars à la pression dans l'enceinte du produit (16).

7. Dispositif suivant l'une des revendications précédentes, caractérisé en ce que, sur l'axe (12) entre le palier inférieur (18) et la garniture étanche à anneau glissant (38, 40), est montée une pompe (42) pour évacuer par le fluide lubrifiant la chaleur qui se produit à la garniture étanche à anneau glissant vers un refroidisseur de carter (64).

8. Dispositif suivant l'une des revendications précédentes, caractérisé en ce que l'axe (12) est pourvu, à son extrémité supérieure, d'une pompe (48) pour évacuer par le fluide lubrifiant la chaleur de l'équipement moteur (28) vers un refroidisseur de carter (64).

9. Dispositif suivant l'une des revendications 3 à 8, caractérisé en ce que, sur l'axe (12), en particulier entre les paliers (18, 20), est disposée une pompe (64) pour la circulation du moyen lubrifiant et l'évacuation de la chaleur vers un refroidisseur de carter (64).

10. Dispositif suivant la revendication 2, caractérisé en ce que la partie externe (30) du coupleur magnétique (26) est enfermée d'une manière étanche par un capot (24) muni d'une conduite d'évacution (72).

11. Dispositif suivant la revendication 1, caractérisé en ce que l'élément statique étanche (36) est le carter d'un moteur de commande qui est éventuellement couplé par un engrenage à l'axe (12).

12. Dispositif suivant la revendication 1, caractérisé en ce que la garniture étanche à anneau glissant est disposée immergée dans le produit.

13. Dispositif suivant la revendication 1, caractérisé en ce que l'axe avec ses paliers et l'équipement moteur, qui sont rendus étanches par la garniture étanche à anneau glissant et l'élément statique étanche, est entouré complètement par le produit.

14. Dispositif suivant l'une des revendications précédentes, caractérisé en ce que la pression différentielle sur la garniture étanche à anneau glissant (38, 40) se monte à environ 0 à 15 % de la pression dans l'enceinte du produit (16).
